# FASCICULE DE BREVET EUROPEEN

(11) **EP 1 343 608 B1**
(45) Date de publication et mention de la délivrance du brevet: **13.04.2005**
(21) Numéro de dépôt: 01995775.2
(22) Date de dépôt: 21.12.2001
(51) Int. Cl.: B23K 37/053

(54) **INSERT DE CENTRAGE ET PROCEDE D'ASSEMBLAGE ET SOUDAGE DE DEUX ELEENTS DE CONDUITE**
ZENTRIEREINSATZ UND VERFAHREN ZUM MONTIEREN UND VERSCHWEISSEN ZWEIER ROHRELEMENTE
CENTRING INSERT AND METHOD FOR ASSEMBLING AND WELDING TWO PIPE ELEMENTS

(30) Priorité: 21.12.2000 FR 0016746
(43) Date de publication de la demande: 17.09.2003
(73) Titulaire: Saipem SA, 78180 Montigny-le-Bretonneux (FR)
(72) Inventeur: BAYLOT, Michel, F-13008 Marseille (FR)
(74) Mandataire: Domange, Maxime
(86) Numéro de dépôt international: PCT/FR2001/004175
(87) Numéro de publication internationale: WO 2002/049799

(56) Documents cités:
- US-A- 3 896 655
- US-A- 4 306 134
- US-A- 4 418 860
- US-A- 4 463 938

## Description

La présente invention concerne un dispositif insert de centrage de deux éléments de conduite à rabouter par soudage, apte à être inséré à l'intérieur desdits éléments de conduite en regard desdits éléments de conduite à souder, de préférence centrés au niveau de leur plan de jonction.

La présente invention concerne également un procédé d'assemblage et soudage de deux éléments de conduite à l'aide d'un dispositif insert de centrage selon l'invention.

La présente invention se rapporte donc au maintien en position de deux éléments de conduites lors des opérations de raboutage par soudage.

Elle concerne en particulier le soudage de deux éléments de conduites sous-marines, à bord de barges ou de navires d'installation, par la méthode dite en S ou en J, principalement lorsque la profondeur d'eau est importante.

L'invention s'applique notamment à la pose d'une conduite constituée de tronçons rectilignes ou "rames" assemblés par soudage et posés de proche en proche, chaque tronçon pouvant lui-même être constitué de plusieurs longueurs de conduite unitaire assemblé par soudage pour constituer une rame.

La pose de conduites sous-marines pour les faibles et moyennes profondeurs est réalisée à partir de supports flottants équipés de moyens de manutention par assemblage de longueurs unitaires de tubes, en général 12 ou 24m. Ces dernières sont manipulées en position horizontale et sont approvisionnées sur une ligne d'assemblage où elles sont raboutées les unes aux autres pour former une conduite continue que l'on déplace, en général en pas à pas de 12 ou 24m, vers l'arrière de la barge. Dans la zone où elle quitte la barge, elle est supporté par une structure semi-flottante à courbure contrôlée, appellée "stinger", dont la fonction est de limiter la courbure de la conduite pour éviter qu'elle ne se plie. L'accostage de la nouvelle longueur unitaire sur la conduite déjà réalisée se fait dans la zone avant de la barge, au premier poste d'assemblage. II ne présente pas de grandes difficultés, car la conduite, reposant sur des chariots ou des rouleaux, peut être maintenue de manière extrêmement rigide, le soudage étant alors effectué sur deux pièces quasiment fixes l'une par rapport à l'autre, même en cas de mouvements importants de la barge soumise aux conditions environementales.

Dès que la profondeur augmente, et surtout pour les profondeurs dépassant 1000m voire 2000m ou plus, on réalise une pose qui est dite en "J", car la portion de conduite entre le niveau du navire et le point de contact sur le fond de la mer est en forme de J. Cette pose en J est décrite notamment dans les demandes de brevet en France FR-A-2 792 991 et FR-A-2 793 540. Lors de la pose, le raccordement de parties successives de conduite nécessite de maintenir stable la partie de conduite déjà immergée, de présenter à l'extrémité supérieure émergée de cette partie de conduite l'extrémité inférieure de la nouvelle partie de conduite, de maintenir fermement les extrémités des éléments de conduites à souder, pour que ladite soudure puisse être effectuée sans risques d'endommagement dus aux divers mouvements du navire et de la portion de conduite réalisée en suspension jusqu'au fond de la mer. Ces endommagements redoutés sont principalement des micro-fissurations lors du processus de soudage, conduisant au mieux à un rejet de la soudure lors des contrôles qualité, au pire à une rupture et à la ruine de l'ensemble lors de la mise en service des installations.

Dans cette pose en J, la difficulté réside dans le fait que toutes les opérations sont effectuées en un seul emplacement, situé en général au niveau du pont du navire, donc près de l'extrémité inférieure de la tour, et de plus, toutes les opérations doivent être exécutées en un temps minimum, en raison du coût opérationnel horaire extrèmement élevé du navire d'installation.

La conduite déjà réalisée étant maintenue en suspension dans la partie basse de la tour est guidée en partie basse de ladite tour de pose en J et fermement maintenue par un système de clamps externe, par exemple tel que décrit dans la demande de brevet en France FR-A-2 801 088, sur une longueur qui n'excède pas quelques mètres, tout au plus. La partie immergée de la conduite est alors soumise à des flexions qui se répercutent sur la partie émergée, par contre, la nouvelle longueur de conduite, appellée rame, mesurant en général 24 ou 48m, peut être maintenue fermement au sein de la tour de pose en J. Ainsi, lors des mouvements du navire sous les effets de la houle, du vent et du courant, la portion de conduite déjà réalisée en suspension bien que très fermement maintenue dans la partie basse de ladite tour, constitue la portion la moins rigide de la zone proche du plan de soudage.

Dans le cas de la pose en S sur barge, on utilise en général un insert de centrage équipé de moyens pneumatiques, pour effectuer le centrage des deux portions de conduites. Cet insert de centrage est constitué d'un système de clamps interne, et permet de maintenir face à face les extrémités des conduites à rabouter et souder et faire coïncider leur axes respectifs. De plus, quand l'épaisseur des conduites n'est pas trop importante, les efforts engendrés par les clamps contre la paroi, plus précisément des poussoirs contre la paroi, ont tendance à remettre "au rond" des conduites ovalisées, ce qui facilite grandement les opérations de soudage. En effet, les conduites présentent souvent des défauts de fabrication se traduisant par une section ovalisée, étant entendu que le différentiel de diamètre entre le plus petit et le plus grand diamètre d'une même section est de l'ordre de quelques millimètres, voire du centimètre ou plus. Les modèles de systèmes de clampage les plus simples effectuent le centrage uniquement dans la zone du plan de soudage et sont dits à deux plans de centrage, lesquels sont répartis de part et d'autre du plan de soudage. Ces plans sont sensiblement perpendiculaires à l'axe des conduites après soudage. Des modèles de systèmes de clampage plus sophistiqués comportent des clamps disposés dans quatre plans, soit deux plans supplémentaires situés de part et d'autre du plan de soudage, de manière à améliorer le lignage des deux éléments de conduites, en créant de part et d'autre du plan de soudage, un encastrement du clamp dans chacune des conduites. Ces inserts de centrage sont en général équipés, dans leur partie centrale d'une enclume, notamment telle que décrite dans la demande N° FR-A-2 801 819 appliquée sur la face interne de la conduite au regard de la zone de soudage, dont la fonction est de maintenir le bain de soudure lors du soudage.

Ainsi, un dispositif insert de centrage vise à maintenir fermement les extrémités de deux conduites à rabouter de manière à ce que tous les degrés de liberté de translation et de rotation soient bloqués, pour éviter tout mouvement parasite relatif des deux faces à souder lors des opérations de soudage proprement dites, cette phase restant la plus délicate lors de l'installation de conduites sous-marines en mer profonde et en ultra-grands fonds, c'est à dire par des profondeurs d'eau de 1500 ou 2000m, voire 3000 à 4000m ou plus.

Un dispositif insert de centrage vise à créer un encastrement dans chacune des portions de conduite à rabouter et une rigidité maximale au niveau du plan de jonction, de manière à minimiser les mouvements relatifs des deux faces à souder, surtout dans le cas de soudure automatique. En particulier, un dispositif insert de centrage vise à minimiser principalement les rotations selon les axes contenus dans le plan de la section de la conduite.

Dans les réalisations antérieures telles que décrites dans US 3937382, US 4418860 et GB 1283922 chacun des plans desdits inserts de centrage à deux ou quatre plans, comprennent des systèmes de clampage du type à effet conformateur circulaire, c'est à dire qu'ils remettent au "rond" les conduites d'épaisseur faible ou moyenne tour en gardant leur objectif principal de centrage.

Plus précisément, dans la présente description, on entend par "système de clampage à effet conformateur circulaire", une pluralité de clamps dans un même plan de centrage comprenant chacun un bloc poussoir et un dispositif de poussée tel qu'un vérin actionnant ledit bloc poussoir, lesdits blocs poussoir étant disposés sensiblement radialement autour dudit axe longitudinal de ladite conduite et coopérant de telle sorte que par poussée sur la paroi interne à section ovale, ils peuvent la déformer pour la "remettre au rond", c'est à dire la circulariser en vue d'obtenir une section circulaire.

Un système de clampage comporte nécessairement trois poussoirs au minimum, de préférence 4, 6, 8,12 poussoirs ou plus, plus le nombre de poussoirs est élevé, meilleure est la conformation circulaire. Le nombre de poussoirs est en général conditionné par la place disponible pour leur installation au sein du corps principal du système de clampage.

Les systèmes de clampage à effet conformateur circulaire décrits dans l'art antérieur comprennent en particulier une première paire de blocs-poussoir opposés qui viennent en contact avec les points opposés les plus rapprochés de l'ovale d'une conduite à section ovale et continuent leur poussée et déforment la conduite pour la circulariser jusqu'à ce qu'une deuxième paire de blocs-poussoirs opposés arrive en butée sur les points opposés de la paroi à section ovale initialement les plus éloignés, de sorte que la totalité des blocs-poussoirs d'un même plan de section puissent être serrés et bloqués contre la paroi.

Ces systèmes de clamps comprennent un corps principal longitudinal supportant une pluralité de clamps comprenant chacun un bloc-poussoir venant buter sur la paroi interne de la conduite et un dispositif de poussée, en général des vérins, qui permettent d'actionner lesdits blocs-poussoir et les déplacer contre ladite paroi interne. Les poussoirs peuvent se déplacer dans des logements de guidage prévus dans le corps principal. Lesdits blocs-poussoir se déplacent en translation dans une direction radiale par rapport à l'axe longitudinal de la conduite et dudit corps principal, c'est-à-dire dans une direction perpendiculaire audit axe longitudinal.

Pour créer cet encastrement, les dispositifs insert de centrage décrits dans l'art antérieur comportent au moins quatre plans de section, dans lesquels sont disposés des clamps à effet conformateur circulaire.

On entend dans la présente description, par "plan de centrage" ou "plan de section" un plan sensiblement perpendiculaire à l'axe longitudinal de la conduite ou respectivement dudit corps principal.

Les inventeurs ont observé que le problème posé dans le cas de pose en J, lorsqu'on met en oeuvre ces systèmes de clampage à effet conformateur circulaire, est que le corps principal de l'insert de centrage subit des contraintes très importantes lors de l'alignement des conduites qui peuvent se traduire par une flexion dans ledit corps, ce qui nécessite de surdimensionner la structure dudit corps principal pour fournir le service de stabilisation recherché pendant la phase de soudage des extrémités desdites conduites..

Un problème posé par la présente invention est donc de fournir un nouveau dispositif insert de centrage qui remplisse les fonctions de maintien et d'encastrement des deux éléments de conduite à rabouter par soudage, comme mentionné ci-dessus, sans toutefois présenter les inconvénients des inserts de centrage à clamps du type à effet conformateur circulaire précédemment cités.

Pour ce faire, la présente invention fournit un dispositif insert de centrage de deux éléments de conduite à rabouter par soudage, apte à être inséré à l'intérieur desdits éléments de conduite en regard des extrémités desdits éléments de conduite à souder, de préférence centrés au niveau de leur plan de jonction, ledit dispositif insert de centrage comprenant un corps principal qui s'étend longitudinalement sensiblement le long de l'axe de ladite conduite; ledit corps principal supportant une pluralité de clamps comprenant chacun un bloc poussoir apte à être actionné par un dispositif de poussée comprenant de préférence un vérin, de préférence encore un vérin pneumatique :
■ lesdits blocs-poussoir pouvant se déplacer en translation dans une direction radiale par rapport à l'axe longitudinal depuis une position rétractée éloignée de la paroi interne de ladite conduite jusqu'à position où ledit bloc poussoir arrive en butée contre ladite paroi de la conduite,
■ lesdits blocs-poussoir étant disposés dans une pluralité de plans de centrage correspondant à des plans de section dudit corps principal, de préférence au moins quatre dits plans de section,
■ lesdits blocs-poussoir étant répartis au nombre d'au moins trois, de préférence au moins quatre, de préférence encore au moins huit, dans chacun desdits plans, de préférence encore selon une répartition angulaire régulière autour dudit axe longitudinal,

De préférence, lesdits clamps comprennent des clamps à effet conformateur circulaire dans au moins une paire de plans de section centraux.

Le dispositif selon l'invention comprend des clamps indépendants disposés dans au moins un plan de section extrême, de préférence au moins une paire de plans de section extrêmes, lesdits clamps étant ainsi aptes à se bloquer contre la paroi interne de ladite conduite en figeant la géométrie de la conduite dans son état initial, au niveau du ou desdits plans extêmes, c'est-à-dire son état avant que lesdits clamps ne soient actionnés en butée contre ladite paroi sans la déformer.

Il en résulte en particulier que le dispositif selon l'invention, après sa mise en place et son actionnement, ne change ni le désaxement angulaire axial des deux dits éléments de conduite, ni la section ovale de la conduite en dehors du plan de soudage. La conduite selon l'invention n'est donc pas déformée par une remise au rond au niveau desdits plans extrêmes.

Dans la présente description, on entend par "plan de section central" ou "paire de plans de section centraux" un ou les deux premiers plans de section dans lesquels est ou sont disposés des clamps, à partir du plan de section médian dudit corps principal et/ou dudit plan de jonction des extrémités de conduite à souder, les deux dits plans de section centraux étant disposés de préférence symétriquement de part et d'autre dudit plan de jonction lorsque l'insert de centrage est en place à l'intérieur des éléments de conduite à rabouter.

De même, on entend par "plan(s) extrême(s) de section", le ou les demier(s) plan(s) de section comprenant des clamps les plus éloignés dudit plan de section médian dudit corps principal et/ou dudit plan de jonction et de préférence disposé symétriquement de part et d'autre de celui-ci.

Classiquement, lesdits deux plans extrêmes sont espacés d'une distance pouvant être de 2 à 5 fois le diamètre interne des éléments de conduite à rabouter.

Lesdits plans de section sont de préférence disposés le long dudit axe longitudinal de manière à pouvoir être situés à des positions symétriques deux à deux par rapport audit plan de jonction des deux éléments conduite lorsque l'insert de centrage est en place à l'intérieur de la conduite.

Le dispositif insert de centrage selon l'invention permet de stabiliser de manière optimale les deux portions de conduite, en les conformant de manière circulaire dans la zone centrale et en les bloquant, au niveau des deux dits plans extrêmes, sans en changer de manière significative ni l'ovalisation, ni le désaxement transversal résultant d'un désaxement angulaire axial des deux dites conduites qui peut être de l'ordre de 1/10^{e} à 1° après que les clamps à effet conformateur circulaire soient rentrés en action dans lesdits plans centraux. En figeant la géométrie du système dans l'état où le clamp rencontre chacune des deux conduites, on évite d'engendrer des contraintes dans le système conduite-insert de centrage, c'est à dire en particulier on limite la flexion dans ledit clamp. Au moment où les clamps se trouvent verrouillés, les contraintes internes de flexion du corps principal dudit insert de centrage sont minimales, voire quasiment nulles. Ainsi, lors des mouvements du navire, le clamp présentera dans toutes les directions un même niveau de contraintes pour un même déplacement angulaire de la conduite en suspension par rapport au navire.

En procédant selon l'art antérieur, c'est à dire en essayant de réaligner les deux conduites et de les remettre au rond dans lesdits plans extrêmes aux extrémités de l'insert de centrage, on introduit des contraintes très importantes dans le corps principal dudit dispositif insert de centrage et celui-ci doit être considérablement surdimensionné pour obtenir un résultat similaire, en terme de rigidité, au dispositif selon l'invention. En revanche, le dispositif selon l'invention permet donc de maintenir fermement, et de préférence de reconformer de manière circulaire la zone du plan de joint, et préserve toute la rigidité de son corps principal pour stabiliser les deux conduites en minimisant la rigidité qui, aux extrémités dudit clamp, serait inutilement employée à remettre la conduite au rond, ou dans l'axe.

Selon un premier mode de réalisation qui convient plus particulièrement pour les conduits de faible diamètre lesdits clamps indépendants selon l'invention dans au moins un dit plan extrême, de préférence dans les deux dits plans extrêmes sont du type "à coins" et comprennent un dispositif de poussée comprenant une rampe appliquée sur la paroi externe dudit corps principal, et lesdits blocs-poussoir étant constitués par une cale qui est apte à se déplacer le long de la rampe et ainsi se rapprocher de ladite paroi interne de la conduite.

Dans ce premier mode de réalisation, ledit clamp indépendant comprend plus particulièrement un dispositif de poussée comprenant un vérin, de préférence pneumatique et une dite rampe inclinée selon une pente montante depuis la surface du corps principal vers ladite paroi interne de la conduite, ledit bloc poussoir consistant en une cale de forme complémentaire à la rampe de manière à présenter une pente de même inclinaison de sorte que ladite cale actionnée par ledit vérin est apte à se déplacer en glissant le long de la rampe jusqu'à venir se bloquer par serrage entre ladite rampe et ladite paroi interne de la conduite.

Dans ces clamps indépendants selon l'invention appelés clamps à coins, la direction du mouvement de la cale comporte donc une composante radiale et une composante longitudinale (axe dudit corps principal ou sensiblement axe de la conduite). Du fait que les vérins sont susceptibles de se mouvoir indépendamment les uns des autres pour les différents clamps à coins, lorsque les cales rencontres une paroi à section ovale elles sont à des positions différentes à la fois dans lesdites directions longitudinales et ladite direction radiale.

La pente de la rampe inclinée est choisie de manière à tenir compte des matériaux de ladite rampe et de ladite cale pour que le frottement engendré soit suffisant à rendre impossible tout mouvement de la cale après que l'ensemble ait été mis en approche puis verrouillé. Ainsi, pour une rampe en acier traité associée à des cales, elles aussi en acier traité, on adoptera une rampe de 10 à 40%, de préférence de 20 à 30%.

Selon un second mode de réalisation qui convient particulièrement pour les conduites à fort diamètre, lesdits clamps indépendants desdits plans extrêmes selon l'invention sont du type à vérins radiaux et comprennent des blocs-poussoir aptes à se déplacer radialement dans des logements de guidage dudit corps principal, lesdits dispositifs de poussée étant constitués par des vérins, de préférence mécaniques à vis, ou hydrauliques, disposés radialement, lesdits blocs poussoirs étant à l'extrémité des tiges mobiles desdits vérins.

Selon la présente invention, l'un desdits plans extrêmes, de préférence les deux dits plans extrêmes, comprennent des clamps indépendants, soit tous du type à coins, soit tous à vérins radiaux. Le dispositif avec clamps à coins indépendants est plus particulièrement adapté aux conduites de petit diamètre, c'est à dire pour des conduites de 8" à 12-14", car l'espace interne disponible est très réduit. Le dispositif avec clamps indépendants à vérins radiaux, qu'ils soient mécaniques ou hydrauliques, peut être mis en oeuvre de manière plus simple s'il y a suffisamment d'espace, c'est à dire dans le cas de conduites de fort diamètre, c'est à dire au delà de 12-14" et jusque 40" et voire même plus.

Dans un mode de réalisation original, selon l'invention, lesdits clamps à effet conformateur circulaire dans un même dit plan de section central sont constitués par une pluralité de blocs-poussoir aptes à se déplacer uniformément et radialement, de préférence dans des logements de guidage dudit corps principal, et lesdits blocs-poussoir d'un même plan central de section sont actionnés uniformément par un même vérin, de préférence pneumatique, par l'intermédiaire d'une pluralité de biellettes, ledit vérin étant placé à l'intérieur dudit corps principal, de préférence disposé longitudinalement.

De préférence, dans le dispositif insert de centrage selon l'invention, les dispositifs de poussée desdits clamps comprennent des vérins, de préférence munis d'un moyen de blocage en position d'extension après serrage dudit bloc-poussoir contre ladite paroi interne.

Plus précisément, chaque vérin est muni d'un moyen de blocage dudit poussoir en position d'extension, la pression dans ledit vérin pouvant alors être relâchée tout en retenant ledit poussoir en position de serrage contre ladite conduite. Ledit moyen de blocage dudit poussoir peut être constitué par un moyen de vissage motorisé, ledit piston étant par exemple solidaire d'un écrou qui coopère avec une vis motorisée de manière à déplacer en translation et bloquer ledit piston en position d'extension par blocage de la vis. D'autres moyens de blocage sont connus de l'homme de l'art.

La présente invention a également pour objet un procédé d'assemblage et soudage de deux éléments de conduite à l'aide d'un dispositif insert de centrage. Selon la présente invention, il comprend les étapes dans lesquelles :
1- on rapproche les deux extrémités desdits éléments de conduite à souder,
2- on positionne ledit dispositif insert de centrage dans un premier élément de conduite;
3- on avance ledit dispositif insert de centrage à l'intérieur dudit premier élément de conduite jusqu'à ce que ledit plan de jonction atteigne le plan de section médian dudit insert de centrage ;
4- on actionne, le cas échéant, lesdits clamps à effet conformateur circulaire dans lesdits plans centraux, puis on les bloque après serrage contre ladite paroi interne des éléments de conduite, et
5- on actionne lesdits clamps indépendants desdits plans extrêmes, puis on les bloque après serrage contre ladite paroi interne desdits éléments de conduite.

D'autres aspects, caractéristiques et avantages de la présente invention, ressortiront mieux à la lecture de la description qui va suivre, faite de manière illustrative et non limitative, en référence aux dessins annexés.

Sur les dessins :
- la figure 1 est un schéma en vue de côté de la pose en J d'une conduite par grande profondeur à partir d'un navire équipé d'une tour de pose 3 de conduites sous marines.
- la figure 2 est la vue en coupe longitudinale de deux tronçons de conduite à l'intérieur desquels est installé un insert de centrage à quatre plans, ledit insert étant en vue de côté,
- la figure 3 est la section de la conduite et de l'insert de centrage au niveau d'un plan ce centrage,
- la figure 4 est la vue de côté du dispositif insert de centrage comprenant des clamps du type à effet conformateur circulaire, constitués d'un vérin, de poussoirs et de genouillères,
- la figure 5 est la vue de côté de deux conduites en phase d'approche présentant un désaxage latéral vers le haut ainsi qu'un désaxage angulaire,
- la figure 6 correspond à la figure 5 dans laquelle le désaxage latéral a été résorbé, mais le désaxage angulaire persiste,
- la figure 7 est la vue en coupe de deux tronçons de conduite à l'intérieur desquels est installé un insert de centrage à quatre plans, les deux du centre étant du type conformateur circulaire selon la figure 4 et les deux extrêmes étant du type à coins indépendants,
- la figure 8 est une vue similaire à la figure 7, les deux plans extrêmes à coins indépendants étant montés dans la même direction.
- la figure 9 est une section au niveau d'un plan extrême, d'un dispositif à vérins mécaniques commandés par des moteurs électriques indépendants.

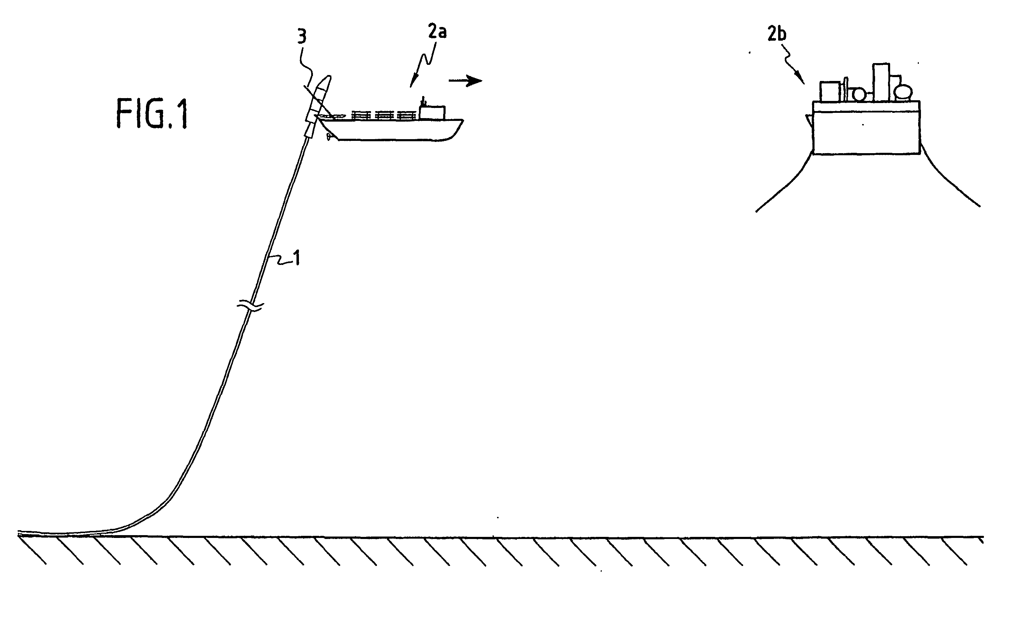

La figure 1 représente en vue de côté la pose en J d'une conduite 1 par grande profondeur à partir d'un navire 2a équipé d'une tour de pose de conduites sous marines 3, se dirigeant vers un support flottant 2b destinataire de ladite conduite. A la base de la tour, approximativement au niveau du pont du navire, sont effectuées les opérations de soudage entre la portion de conduite 1 déjà posée et une rame 5, en général de 24m ou 48m de long, est transférée de la position horizontale sur le pont vers l'axe de pose de la tour, au moyen d'un bras de chargement articulé non représenté. Après relevage du bras, la conduite 1 et la rame 5 sont sensiblement coaxiales et ne peuvent être soudées qu'après avoir été stabilisées au moyen d'un insert de centrage permettant d'aligner et de maintenir fermement les conduites dans la zone du plan de soudage. L'insert de centrage interne maintient l'ensemble pendant toute la durée d'assemblage, puis est retiré avant que la conduite ne soit descendue pour la mise en place de la prochaine rame.

Le corps principal 4 peut comprendre des roulettes ou des patins disposés radialement (non représentés) qui facilitent son insertion et le déplacement à l'intérieur de la conduite avant d'actionner les clamps. Les roulettes et/ou patins sont alors disposés dans plusieurs plans de section ("plans de roulage") entre les plans de centrage ou à l'extérieur de ceux-ci, à raison de 3, 4, 6 ou 8 par plan de roulage.

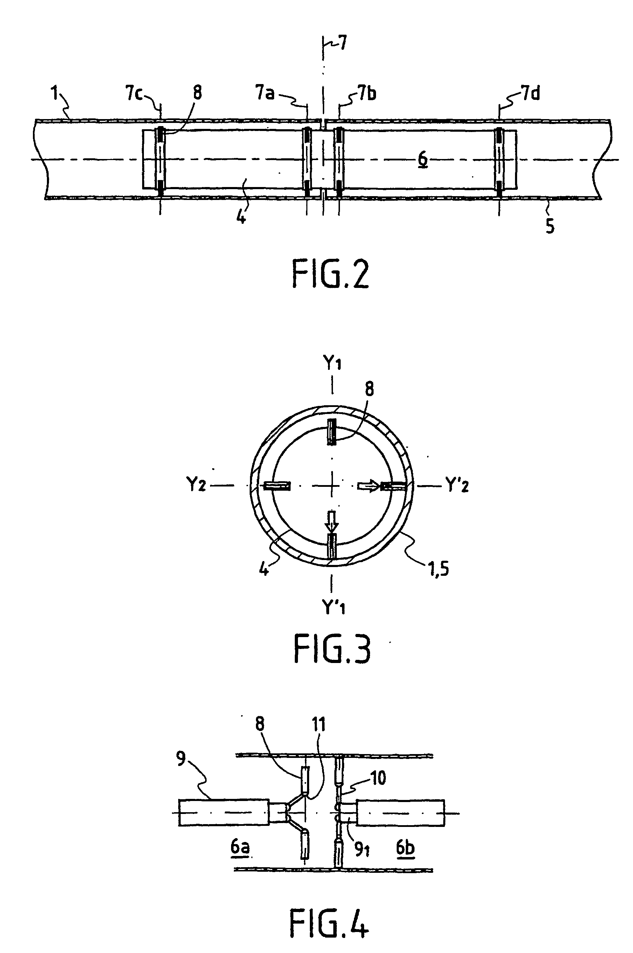

Sur les figures 2 à 9 ledit dispositif insert de centrage 6 comprend un corps principal 4 qui s'étend longitudinalement sensiblement le long de l'axe XX' de ladite conduite 1, 5.

Les figures 2 & 3 représentent respectivement en vue de côté et en coupe un insert de centrage 6 à quatre plans de centrage, les plans centraux 7a-7b ainsi que les plans d'extrémité 7c-7d, les clamps 6a-6b étant tous du type à effet conformateur circulaire tel qu'explicité dans la figure 4. Ledit insert est installé à l'intérieur, au niveau du plan de soudage 7, d'une conduite déjà posée 1 et d'une rame 5. Chacun des plans 7a-7d est muni de poussoirs 8, au minimum trois poussoirs, en général quatre, six ou huit poussoirs, lesdits poussoirs étant disposés radialement Y₁Y'₁, Y₂Y'₂ par rapport à l'axe longitudinal XX' de l'insert de centrage 6 et/ou de la conduite 1 et actionné par un même vérin 9, en général pneumatique comme détaillé sur la figure 4.

La figure 4 détaille le mode de fonctionnement d'un clamp 6a-6b conformateur circulaire comprenant un vérin 9 actionnant des poussoirs 8 par l'intermédiaire de biellettes 10 articulées à la tige 9₁ du vérin et au poussoir 8 en 11. Le vérin 9 est en position rétractée sur la gauche du dessin, les poussoirs sont alors en retrait par rapport à la conduite 1. Sur la partie droite, la tige 9₁ de verin est sortie en position expansée et par le jeu des biellettes 10, les poussoirs 8 sont avancés et arrivent en butée contre ladite conduite 1. Pour la clarté du dessin, les moyens de guidage desdits poussoirs ne sont pas représentés. La tige 9₁ de vérin agissant simultanément sur les trois, quatre, six ou huit biellettes agit de même simultanément sur les poussoirs 8 correspondant. Les biellettes 10 étant de longueur identique, les poussoirs 8 étant aussi de longueur identique, lors du forçage de la genouillère crée par les biellettes, la conduite sera remise à l'axe de l'insert de centrage. Lorsque les conduites ne sont pas de trop forte épaisseur, l'insert de centrage agit comme un conformateur circulaire, car il a la capacité de remettre au rond une conduite ovalisée.

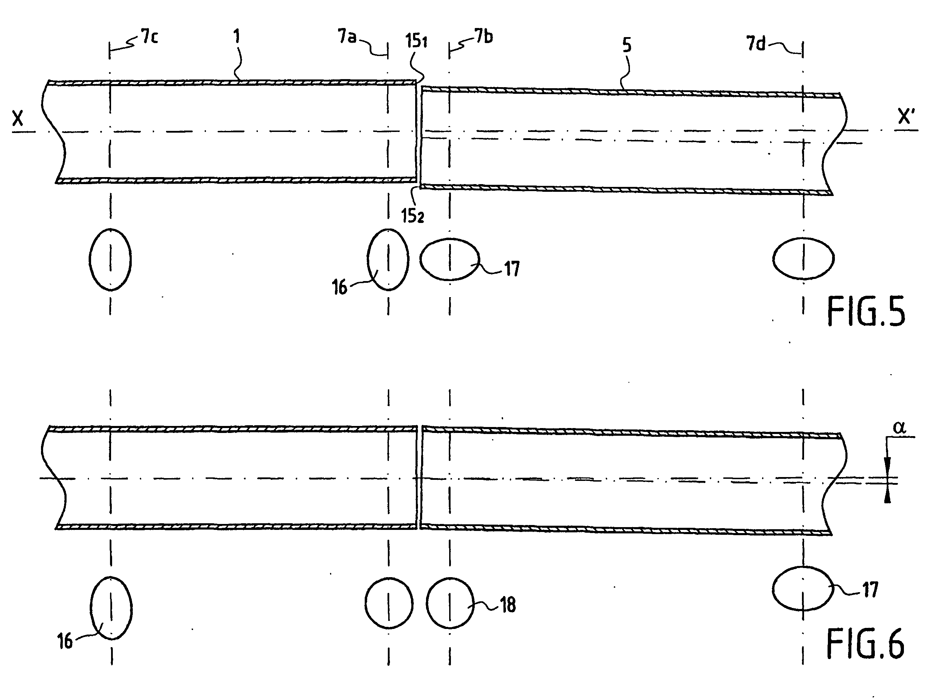

Les figures 5 et 6 représentent deux conduites 1-5 prêtes à être assemblées par soudage et présentant sur la figure 5 un désaxage latéral au niveau du plan de soudage, ainsi qu'un désaxage angulaire α. De plus la conduite 1 présente une ovalisation verticale 16, alors que la rame 5 présente une ovalisation horizontale 17.

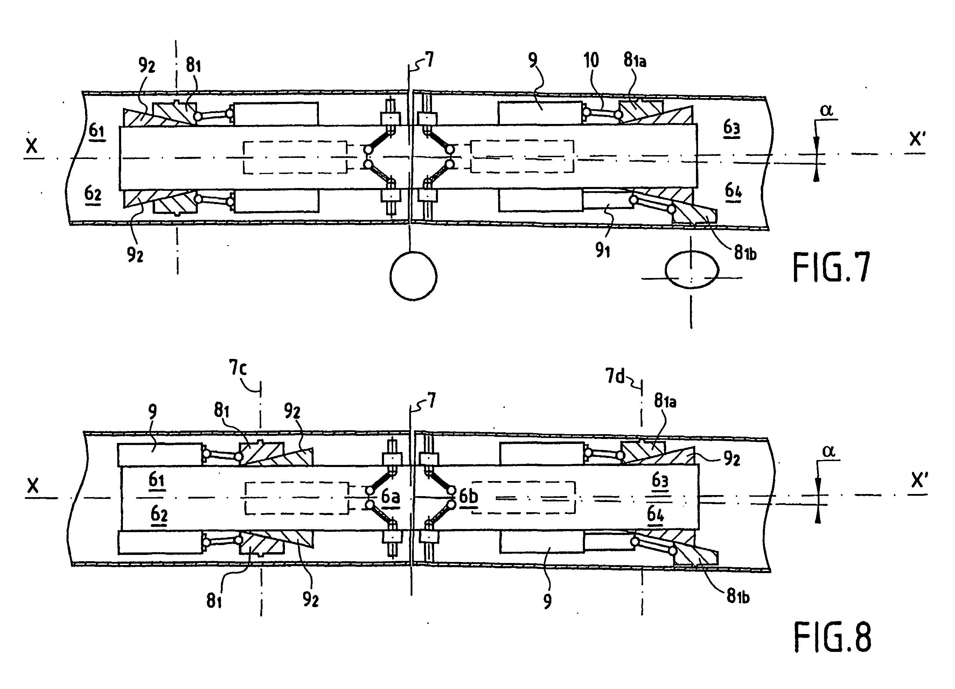

Dans la figure 6, un insert de centrage, non représenté, a été installé de manière à ce que les axes des deux éléments de conduite coïncident au niveau du plan de soudage 7. L'insert de centrage est du type à quatre plans, les deux plans centraux 7a-7b, non représentés, étant munis de clamps du type conformateur circulaire tel que décrit dans les figures 2, 3 & 4, les plans extrêmes 7c-7d, non représentés, étant du type à coins selon l'invention et tel que détaillé dans la figure 7. On notera dans la figure 6 que les deux conduites ont été remises au rond 18 dans la zone du plan de joint 7 alors qu'elles ont conservé leur ovalisation respective ainsi que leur désaxement angulaire dans la zone des plans extrêmes grâce à l'effet de coins décrit ci-après.

Sur les figures 7 à 9 ledit corps principal 4 supporte une pluralité de clamps 6a-6b, 6₁-6₄ comprenant chacun un bloc poussoir 8₁, 8₂ apte à être actionné par un dispositif de poussée 9, comprenant un vérin, de préférence un vérin pneumatique ; lesdits blocs-poussoir 8₁,8₂ sont disposés dans 4 plans de centrage 7a-7d correspondant à des plans de section. Lesdits blocs-poussoir 8₁,8₂ sont répartis au nombre d'au moins trois, de préférence au moins quatre, six, huit, ou plus dans chacun desdits plans selon une répartition angulaire, de préférence régulière autour dudit axe longitudinal XX'.

Lesdits clamps comprennent des clamps à effet conformateur circulaire 6a- 6b dans une paire de plans de section centraux 7a-7b, et des clamps 6₁-6₄ disposés dans une paire de plans extrêmes 7c, 7d, lesdits clamps 6₁-6₄ desdits plans extrêmes 7c-7d étant aptes à se bloquer contre la paroi interne de ladite conduite sans la déformer, en figeant la géométrie de la conduite dans son état initial avant que lesdits clamps 6₁-6₄ ne soient actionnés en butée contre ladite paroi.

Lesdits clamps 6₁-6₄ dans lesdits plans extrêmes 7c-7d sont des clamps indépendants, lesdits blocs-poussoir 8₁,8₂ desdits clamps indépendants 6₁-6₄ étant aptes à se déplacer en translation dans ladite direction radiale indépendamment les uns des autres et de manière non uniforme, la puissance de leur dispositif de poussée étant limitée de manière à ce que lorsque les premiers blocs-poussoir 8₁a,8₂ arrivent en butée contre la paroi interne de ladite conduite, ils ne se déplacent plus et les autres blocs-poussoir 8₁b du même dit plan extrême de section 7c-7d qui ne sont pas encore en contact, continuent à se déplacer jusqu'à arriver à leur tour en butée contre ladite paroi interne.

Les figures 7 à 9 représentent un insert de centrage 6 équipé de deux plans centraux 7a-7b avec des clamps de type conformateur circulaire tels que décrits précédemment et deux plans extrêmes 7c-7d avec des clamps de type à coins indépendants.

Dans le mode de réalisation des figures 7 et 8 lesdits plans extrêmes 7c-7d correspondent à des plans de section du corps principal au niveau médian des cales 8₁ des coins ou coins 8₁ en position de retrait par rapport à la paroi.

Dans les figures 7 à 9, lesdits clamps à effet conformateur circulaire 6a-6b dans les deux plans centraux 7a-7b sont constitués par une pluralité de blocs-poussoir 8 aptes à se déplacer uniformément et radialement Y₁Y₁'- Y₂Y₂', de préférence dans des logements de guidage dudit corps principal 4, et lesdits blocs-poussoir 8 d'un même plan de section central 7a-7b sont actionnés uniformément par un même vérin 9, de préférence pneumatique, par l'intermédiaire d'une pluralité de biellettes 10, ledit vérin 9 étant placé à l'intérieur dudit corps principal (4), de préférence disposé longitudinalement XX'.

Sur les figures 7 et 8, lesdits clamps indépendants 6₁-6₄ des deux dits. plans extrêmes comprennent chacun un dispositif de poussée 9-9₁-9₂ comprenant un vérin 9, de préférence pneumatique, une tige de vérin 9₁ et une rampe 9₂ inclinée selon une pente montante depuis la surface du corps principal 4, vers ladite paroi interne de la conduite 1, 5, et ledit bloc poussoir consiste en un coin ou cale 8₁ de forme complémentaire à la rampe 9₂ de manière à présenter une pente de même inclinaison de sorte que ladite cale 8₁ actionnée par ledit vérin 9 est apte à se déplacer en glissant le long de la rampe 9₂ jusqu'à. se bloquer par serrage entre ladite rampe 9₂ et ladite paroi interne de la conduite 1,5, la pente de la dite rampe étant de 10 à 40%, de préférence de 20 à 30%.

L'assemblage des deux conduites 1, 5 comprend les étapes dans lesquelles : positionne ledit dispositif insert de centrage 6 à une
1- on maintient en suspension l'extrémité de la conduite 1 ;
2- on présente le deuxième élément de conduite 5 près de l'extrémité de la conduite 1;
3- on introduit le dispositif insert de centrage 6 par l'extrémité libre de l'élément de conduite 5 et on le déplace à l'intérieur jusqu'à ce qu'il atteigne le plan de jonction 7;
4- on ajuste la position de l'insert de centrage de manière à ce que son axe médian coïncide avec le plan de jonction 7, ce dernier étant formé par les deux extrémités 15₁-15₂ desdits éléments de conduite 1, 5 à souder;
5- on actionne le cas échéant lesdits clamps à effet conformateur circulaire 6a-6b dans lesdits plans centraux 7a-7b, en transmettant la forte puissance des vérins aux poussoirs 8, notamment une pression de 20 à 40 bars, qui déplacent la paroi rencontrée en premier lieu et la déforme jusqu'à ce que tous les poussoirs d'un même plan de centrage arrivent enfin en butée contre ladite paroi, celle-ci se trouvant alors circularisée, si l'épaisseur de la conduite le permet. On bloque alors lesdits poussoirs après serrage contre ladite paroi interne des éléments de conduite 1, 5, en maintenant la pression dans le circuit;
6- on actionne lesdits clamps indépendants 6₁-6₄ desdits plans extrêmes 7c-7d. Pour ce faire, la pression dans les vérins est relativement faible, environ 3 bars, car on cherche à éviter de déplacer la paroi. Ainsi, dès qu'une cale 8₁a rencontre une paroi, elle est immobilisée. En revanche les autres cales 8₁b continuent de se déplacer. Quand toutes lés cales 8₁, 8₁a, 8₁b sont en butée contre la paroi, on les bloque après serrage contre ladite paroi interne desdits éléments de conduite 1, 5 en augmentant la pression uniformément dans tous les vérins jusqu'à atteindre une pression, par exemple, de 20 à 40 bars. Dans cette position, on maintient la pression pendant toute l'opération de soudage.

Sur les figures 7 à 8 chacun des clamps 6₁-6₄ à coins 8₁ est constitué d'au minimum trois, de préférence 4, 6, 8 ou 12 coins identiques 8₁ mis en mouvement par un actionneur, de préférence de type vérin pneumatique, le dit actionneur étant relié audit coin par une biellette 10 articulée au niveau de ses extrémités 11. Sous l'action du vérin 9, le coin 8₁ se déplace sur le plan incliné 9₂ jusqu'à ce qu'il vienne en contact avec la conduite. Tous les vérins d'un même plan sont reliés ensemble et alimentés de manière simultanée. Sur la gauche du dessin, les coins 8₁ sont en retrait par rapport à la conduite. Sur la droite les vérins 9 on été actionnés et du fait que la conduite est désaxée d'un angle α, le coin 8₁a vient en contact le premier avec la conduite et reste dans cette position, car la pression reste faible dans le circuit, puisque les autres vérins continuent à avancer sans rencontrer d'obstacle. Les coins 8₁ vont ainsi venir en butée successivement, le coin 8₁b étant beaucoup plus en avant que le coin 8₁. Dès que tous les coins 8₁, 8₁a, 8₁b sont en contact avec la conduite 5, la pression dans le circuit peut être augmentée simultanément dans tous les vérins 9 et la conduite 1, 5 se trouve immobilisée dans cette position sans que la conduite n'ait été reconformée de manière circulaire ni remise à l'axe de l'insert de centrage. Ainsi, le dispositif selon l'invention, redonne aux deux conduites 1, 5, une configuration circulaire axée au niveau du plan de soudage 7, et fige, à ses extrémités, la configuration des deux conduites dans l'état existant, c'est à dire sans modifier de manière significative l'ovalisation desdites conduites et en respectant le désaxage angulaire.

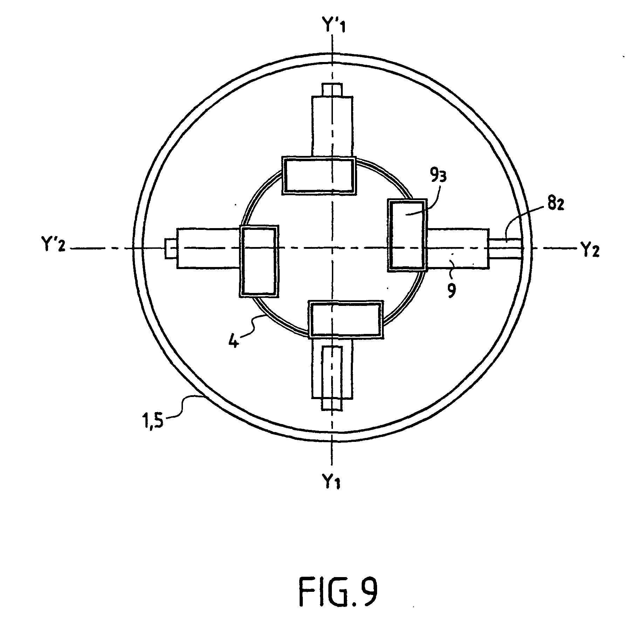

La figure 9 est une vue en coupe au niveau d'un plan extrême 7c-7d comportant quatre vérins mécaniques à vis 9 commandé par un moteur électrique 9₃. Le poussoir 8₂ est représenté en position rétractée sauf sur la droite du dessin où il est en contact avec la conduite 1-5. La séquence de serrage s'effectue selon la procédure suivante:
- tous les poussoirs 8₂ sont en retrait,
- alimentation simultanée de tous les moteurs 9₃ en appliquant un couple très faible, par exemple en contrôlant et limitant l'ampérage desdits moteurs,
- dès qu'un poussoir 8₂ entre en contact, le moteur se bloque par manque de puissance, sans modifier de manière significative la géométrie de la conduite,
- lorsque tous les poussoirs 8₂ sont en contact, chacun des moteurs est piloté individuellement pour effectuer, par exemple, un demi tour supplémentaire. Pour cela on alimente le moteur avec l'ampérage nécessaire, mais on contrôle sa rotation et l'on coupe l'alimentation dès que ce demi tour a été réalisé. De préférence les moteurs sont actionnés deux par deux, en opposition diamétrale pour conserver au mieux la géométrie d'ensemble.
Ce type de moteur étant connu de l'homme de l'art dans le domaine de l'asservissement électrique ne sera pas développé plus en détails ici.

Sur la figure 9, lesdits blocs-poussoir 8₂ des deux dits plans extrêmes 7c-7d sont aptes à se déplacer radialement dans des logements de guidage dudit corps principal 4 indépendamment les uns des autres et de manière non uniforme, desdits dispositifs de poussée sont constitués par des vérins 9, mécaniques à vis, disposés radialement Y₁Y₁', Y₂Y₂', lesdits blocs poussoirs 8₂ constituant l'extrémité des tiges mobiles desdits vérins.

Un résultat similaire est obtenu avec des vérins hydrauliques actionnés simultanément à pression réduite, par exemple 5 bars, jusqu'à ce que les poussoirs soient en contact avec la conduite. Les vérins sont alors isolés les uns des autres et un volume donné, par exemple 10cm3 d'huile est injecté dans chacun d'entre eux, de préférence simultanément par paires diamétralement opposées de manière à bloquer la géométrie du système. Les vérins ainsi sous pression, sont alors isolés du circuit pendant toute la procédure de soudage

Dans une version préférée du dispositif avec des clamps du type à coins opéré par des vérins pneumatiques indépendants, les cales sont avantageusement déplacés par un vérin unique, mais chacune est reliée à ce dernier par un ressort, de préférence un ressort à gaz, de manière à ce que la progression de la cale soit limitée dès lors qu'il entre en contact avec la conduite 1,5, et qu'il n'en résulte aucune circularisation de la conduite, ni aucune remise à l'axe d'une conduite par rapport à l'autre. Dans cette configuration, l'effet de blocage est obtenu par maintien de la pression dans le vérin unique, les frottements internes au niveau de la cale associée à sa rampe, empêchant toute modification de la géométrie entre l'insert de centrage et chacune des conduites 1,5, pendant toute la durée du cycle de soudage.

Le dispositif selon l'invention peut être considéré comme "iso-force", par opposition aux dispositifs à conformation circulaire selon l'art antérieur qui sont de type "iso-déplacement".

Le dispositif selon l'invention a été décrit dans le cadre de la pose des conduites en mer profonde, mais elle s'applique à tout types de conduites, à terre, en mer, et pour tous types d'industrie, telle la chimie, la pétrochimie, le chauffage, et en général toute industrie utilisant des conduites pour véhiculer des fluides de toutes natures.

## Revendications

1. Dispositif insert de centrage (6) de deux éléments de conduite (1, 5) à rabouter par soudage, apte à être inséré à l'intérieur desdits éléments de conduite (1,5) en regard des extrémités desdits éléments de conduite à souder, de préférence centrés au niveau de leur plan de jonction (7), ledit dispositif insert de centrage (6) comprenant un corps principal (4) qui s'étend longitudinalement sensiblement le long de l'axe (XX') de ladite conduite (1, 5); ledit corps principal (4) supportant une pluralité de clamps (6a-6b, 6₁-6₄) comprenant chacun un bloc poussoir (8, 8₁, 8₂) apte à être actionné par un dispositif de poussée (9), comprenant de préférence un vérin, de préférence encore un vérin pneumatique;
■ lesdits blocs-poussoir (8,8₁,8₂) pouvant se déplacer en translation dans une direction radiale par rapport à l'axe longitudinal (XX') depuis une position rétractée éloignée de la paroi interne de ladite conduite (1, 5) jusqu'à position où ledit bloc poussoir (8,8₁,8₂), arrive en butée contre ladite paroi de la conduite,
■ lesdits blocs-poussoir (8,8₁,8₂) étant disposés dans une pluralité de plans de centrage (7a-7d) correspondant à des plans de section, de préférence au moins quatre dits plans,
■ lesdits blocs-poussoir (8,8_{1,}8₂) étant répartis au nombre d'au moins trois, de préférence au moins quatre dans chacun desdits plans selon une répartition angulaire régulière autour dudit axe longitudinal (XX'), ledit dispositif insert de centrage **caractérisé en ce que** lesdits clamps comprennent des clamps indépendants (6₁-6₄) disposés dans au moins un plan de section extrême, de préférence au moins une paire de plans extrêmes, lesdits blocs-poussoir (8₁,8₂) desdits clamps indépendants (6₁-6₄) étant aptes à se déplacer en translation dans ladite direction radiale indépendamment les uns des autres et de manière non uniforme, la puissance de leur dispositif de poussée étant limitée de manière à ce que lorsque les premiers blocs-poussoir (8₁,8₂) arrivent en butée contre la paroi interne de ladite conduite, ils ne se déplacent plus et les autres blocs-poussoir (8₁-8₂) du même dit plan extrême de section (7c-7d) qui ne sont pas encore en contact, continuent à se déplacer jusqu'à arriver à leur tour en butée contre ladite paroi interne. (7c, 7d), lesdits clamps indépendants (6₁-6₄) du ou desdits plans extrêmes (7c-7d) étant ainsi aptes à se bloquer contre la paroi interne de ladite conduite en figeant la géométrie de la conduite dans son état initial au niveau desdits plans extrêmes, sans la déformer..

2. Dispositif insert de centrage selon la revendication 1, **caractérisé en ce que** lesdits clamps indépendants (6₁-6₄) dans au moins un dit plan extrême, de préférence dans les deux dits plans extrêmes (7c-7d) comprennent chacun un dispositif de poussée (9₁-9₂) comprenant une rampe (9₃) appliquée sur la paroi externe dudit corps principal (4), et undit bloc-poussoir constitué par une cale (8₁) apte à se déplacer le long de la rampe (9₂) et ainsi se rapprocher de ladite paroi interne de la conduite (1₅).

3. Dispositif insert de centrage selon la revendication 2, **caractérisé en ce que** ledit clamp indépendant (6₁-6₄) comprend un dispositif de poussée (9₁-9₂) comprenant un vérin (9₁), de préférence pneumatique et une rampe (9₂) inclinée selon une pente montante depuis la surface du corps principal (4), vers ladite paroi interne de la conduite (1, 5), et ledit bloc poussoir consistant en une cale (8₁) de forme complémentaire à la rampe (9₁) de manière à présenter une pente de même inclinaison de sorte que ladite cale (8₁) actionnée par ledit vérin (9) est apte à se déplacer en glissant le long de la rampe (9₂) jusqu'à se bloquer par serrage entre ladite rampe (9₂) et ladite paroi interne de la conduite (1₅).

4. Dispositif insert de centrage selon la revendication 1, **caractérisé en ce que** lesdits blocs-poussoir (8₂) d'au moins un dit plan extrême, de préférence au moins les deux dits plans extrêmes (7c-7d) sont aptes à se déplacer radialement dans des logements de guidage dudit corps principal (4), lesdits dispositifs de poussée étant constitués par des vérins, de préférence mécaniques à vis, ou hydrauliques, disposés radialement, lesdits blocs poussoirs (8₂) étant à l'extrémité des tiges mobiles desdits vérins.

5. Dispositif insert de centrage selon l'une des revendications 1 à 4, **caractérisé en ce que** lesdits clamps comprennent des clamps à effet conformateur circulaire (6a- 6b) dans au moins une paire de plans de section centraux (7a-7b),

6. Dispositif insert de centrage selon la revendication 5, **caractérisé en ce que** lesdits clamps à effet conformateur circulaire (6a-6b) dans un même plan central (7a-7b) sont constitués par une pluralité de blocs-poussoir (8) aptes à se déplacer uniformément et radialement (Y₁Y₁'- Y₂Y₂'), de préférence dans des logements de guidage dudit corps principal (4), et lesdits blocs-poussoir (8) d'un même plan de section central (7a-7b) sont actionnés uniformément par un même vérin (9), de préférence pneumatique, par l'intermédiaire d'une pluralité de biellettes (10), ledit vérin (9) étant placé à l'intérieur dudit corps principal (4), de préférence disposé longitudinalement (XX').

7. Dispositif insert de centrage selon l'une des revendications 1 à 6, **caractérisé en ce que** les dispositifs de poussée desdits clamps (6a-6b, 6₁-6₄) comprennent des vérins (9), de préférence munis d'un moyen de blocage en position d'extension après serrage dudit bloc-poussoir contre ladite paroi interne.

8. Dispositif selon l'une des revendications 1 à 7, **caractérisé en ce que** lesdits blocs poussoirs (8,8₁,8₂) sont répartis dans au moins 4 dits plans de section (7) comprenant 2 dits plans centraux (7a,7b) et au moins 2 dits plans extrêmes (7c,7d).

9. Dispositif selon l'une des revendications 1 à 8, **caractérisé en ce que** chacun desdits plans de section comprennent au moins 4, de préférence au moins 8 dits blocs-poussoir.

10. Procédé d'assemblage et soudage de deux éléments de conduite (1, 5) à l'aide d'un dispositif insert de centrage selon l'une des revendications 1 à 8, **caractérisé en ce qu'**il comprend les étapes dans lesquelles :
1- on rapproche les deux extrémités (15₁-15₂) desdits éléments de conduite (1, 5) à souder,
2- on positionne ledit dispositif insert de centrage (6) dans un premier élément de conduite (5) ;
3- on avance ledit dispositif insert de centrage (6) à l'intérieur dudit premier élément de conduite jusqu'à ce que ledit plan de jonction (7) atteigne le plan de section médian (7) dudit insert de centrage ;
4- on actionne, le cas échéant, lesdits clamps à effet conformateur circulaire (6a-6b) dans lesdits plans centraux (7a-7b), puis on les bloque après serrage contre ladite paroi interne des éléments de conduite (1, 5), et
5- on actionne lesdits clamps indépendants (6₁-6₄) desdits plans extrêmes (7c-7d), puis on les bloque après serrage contre ladite paroi interne desdits éléments de conduite (1, 5).

## Patentansprüche

1. Einsatz-Vorrichtung zum Zentrieren (6) von zwei durch Schweißen aneinanderzufügenden Rohrleitungselementen (1, 5), welche geeignet ist, in das Innere der Rohrleitungselemente (1, 5) gegenüber den Enden der zu verschweißenden, vorzugsweise im Bereich ihrer Verbindungsebene (7) zentrierten Rohrleitungselemente eingesetzt zu werden, wobei die Zentriereinsatz-Vorrichtung (6) einen Hauptkörper (4) aufweist, der sich im Wesentlichen entlang der Achse (XX') der Rohrleitung (1, 5) in der Längsrichtung erstreckt; wobei der Hauptkörper (4) eine Vielzahl von Klemmen (6a-6b, 6₁-6₄) trägt, die jeweils einen Drückerblock (8, 8₁, 8₂) umfassen, welcher geeignet ist, durch eine Schubvorrichtung (9), die vorzugsweise einen Zylinder, weiterhin vorzugsweise einen Pneumatikzylinder aufweist, betätigt zu werden;
• wobei die Drückerblöcke (8, 8₁, 8₂) von einer von der Innenwand der Rohrleitung (1, 5) entfernten, eingezogenen Position bis in eine Position, in welcher der Drückerblock (8, 8₁, 8₂) an der genannten Wand der Rohrleitung anschlägt, in einer in Bezug auf die Längsachse (XX') radialen Richtung verschiebebeweglich sind,
• wobei die Drückerblöcke (8, 8₁, 8₂) in einer Vielzahl von Querschnittsebenen entsprechenden Zentrierebenen (7a-7d), vorzugsweise wenigstens vier genannten Ebenen angeordnet sind,
• wobei die Drückerblöcke (8, 8₁, 8₂) wenigstens zu dritt, vorzugsweise wenigstens zu viert in jeder der genannten Ebenen nach einer gleichmäßigen Winkelverteilung um die Längsachse (XX') verteilt sind, wobei die Zentriereinsatz-Vorrichtung **dadurch gekennzeichnet ist, daß** die Klemmen unabhängige Klemmen (6₁-6₄) umfassen, die in wenigstens einer Endquerschnittsebene, vorzugsweise wenigstens einem Paar von Endebenen angeordnet sind, wobei die Drückerblöcke (8₁, 8₂) der unabhängigen Klemmen (6₁-6₄) in der Lage sind, in der radialen Richtung unabhängig voneinander und ungleichmäßig eine Verschiebebewegung auszuführen, wobei die Leistung ihrer Schubvorrichtung derart begrenzt ist, daß wenn die ersten Drückerblöcke (8₁, 8₂) an der Innenwand der Rohrleitung anschlagen, sie sich nicht mehr bewegen und die anderen Drückerblöcke (8₁-8₂) der gleichen Querschnittsendebene (7c-7d), die noch nicht in Kontakt sind, sich weiter bewegen, bis sie ihrerseits an der Innenwand (7c, 7d) anschlagen, wodurch die unabhängigen Klemmen (6₁-6₄) der Endebene(n) (7c-7d) in der Lage sind, an der Innenwand der Rohrleitung dadurch festgelegt zu werden, daß die Geometrie der Rohrleitung in ihrem Anfangszustand im Bereich der Endebenen eingefroren wird, ohne sie zu verformen.

2. Zentriereinsatz-Vorrichtung nach Anspruch 1, **dadurch gekennzeichnet, daß** die unabhängigen Klemmen (6₁-6₄) in wenigstens einer Endebene, vorzugsweise in beiden Endebenen (7c-7d) jeweils eine Schubvorrichtung (9₁-9₂) mit einer an der Außenwand des Hauptkörpers (4) angelegten Rampe (9₂) sowie einen Drückerblock aufweisen, welcher von einem Keil (8₁) gebildet ist, der geeignet ist, sich entlang der Rampe (9₂) zu bewegen und sich auf diese Weise der Innenwand der Rohrleitung (1₅) zu nähern.

3. Zentriereinsatz-Vorrichtung nach Anspruch 2, **dadurch gekennzeichnet, daß** die unabhängige Klemme (6₁-6₄) eine Schubvorrichtung (9₁-9₂) mit einem Zylinder (9₁), vorzugsweise einem Pneumatikzylinder, und einer Rampe (9₂) aufweist, die entlang einer ansteigenden Schräge von der Oberfläche des Hauptkörpers (4) zur Innenwand der Rohrleitung (1, 5) geneigt ist, und wobei der Drückerblock aus einem Keil (8₁) besteht, der eine zur Rampe (9₂) komplementäre Form aufweist, derart, daß er eine Schräge gleicher Neigung hat, so daß der durch den Zylinder (9) betätigte Keil (8₁) in der Lage ist, sich entlang der Rampe (9₂) gleitend zu bewegen, bis er durch Festklemmen zwischen der Rampe (9₂) und der Innenwand der Rohrleitung (1₅) festgelegt wird.

4. Zentriereinsatz-Vorrichtung nach Anspruch 1, **dadurch gekennzeichnet, daß** die Drückerblöcke (8₂) wenigstens einer Endebene, vorzugsweise wenigstens beider Endebenen (7c-7d) geeignet sind, sich in Führungsaufnahmen des Hauptkörpers (4) radial zu bewegen, wobei die Schubvorrichtungen von radial angeordneten Zylindern, vorzugsweise mechanischen Schraubenzylindern oder Hydraulikzylindern gebildet sind, wobei sich die Drückerblöcke (8₂) am Ende der beweglichen Stangen der Zylinder befinden.

5. Zentriereinsatz-Vorrichtung nach einem der Ansprüche 1 bis 4, **dadurch gekennzeichnet, daß** die Klemmen Klemmen mit Kreisformungswirkung (6a-6b) in wenigstens einem Paar von mittleren Querschnittsebenen (7a-7b) umfassen.

6. Zentriereinsatz-Vorrichtung nach Anspruch 5, **dadurch gekennzeichnet, daß** die Klemmen mit Kreisformungswirkung (6a-6b) in einer gleichen mittleren Ebene (7a-7b) von einer Vielzahl von Drückerblöcken (8) gebildet sind, welche geeignet sind, sich gleichmäßig und radial (Y₁Y₁'-Y₂Y₂'), vorzugsweise in Führungsaufnahmen des Hauptkörpers (4) zu bewegen, und die Drückerblöcke (8) einer gleichen mittleren Querschnittsebene (7a-7b) durch einen gleichen Zylinder (9), vorzugsweise Pneumatikzylinder, mittels einer Vielzahl von Schwingarmen (10) gleichmäßig betätigt werden, wobei der Zylinder (9) innerhalb des Hauptkörpers (4) angebracht, vorzugsweise in der Längsrichtung (XX') angeordnet ist.

7. Zentriereinsatz-Vorrichtung nach einem der Ansprüche 1 bis 6, **dadurch gekennzeichnet, daß** die Schubvorrichtungen der Klemmen (6a-6b, 6₁-6₄) Zylinder (9) umfassen, die vorzugsweise mit einem Mittel zum Festlegen in der Streckposition nach Festklemmen des Drückerblocks an der Innenwand versehen sind.

8. Vorrichtung nach einem der Ansprüche 1 bis 7, **dadurch gekennzeichnet, daß** die Drückerblöcke (8, 8₁, 8₂) in wenigstens 4 Querschnittsebenen (7), die 2 mittlere Ebenen (7a, 7b) und wenigstens 2 Endebenen (7c, 7d) umfassen, verteilt sind.

9. Vorrichtung nach einem der Ansprüche 1 bis 8, **dadurch gekennzeichnet, daß** eine jede der Querschnittsebenen wenigstens 4, vorzugsweise wenigstens 8 Drückerblöcke aufweist.

10. Verfahren zum Zusammenfügen und Verschweißen von zwei Rohrleitungselementen (1, 5) mit Hilfe einer Zentriereinsatz-Vorrichtung nach einem der Ansprüche 1 bis 8, **dadurch gekennzeichnet, daß** es die Schritte umfaßt, bei denen:
1 - die zwei Enden (15₁-15₂) der zu verschweißenden Rohrleitungselemente (1, 5) einander genähert werden,
2 - die Zentriereinsatz-Vorrichtung (6) in einem ersten Rohrleitungselement (5) positioniert wird;
3 - die Zentriereinsatz-Vorrichtung (6) innerhalb des ersten Rohrleitungselements vorgeschoben wird, bis die Verbindungsebene (7) die mittlere Querschnittsebene (7) des Zentriereinsatzes erreicht;
4 - gegebenenfalls die Klemmen mit Kreisformungswirkung (6a-6b) in den mittleren Ebenen (7a-7b) betätigt werden, sie anschließend nach Festklemmen an der Innenwand der Rohrleitungselemente (1, 5) festgelegt werden, und
5 - die unabhängigen Klemmen (6₁-6₄) der Endebenen (7c-7d) betätigt werden, sie anschließend nach Festklemmen an der Innenwand der Rohrleitungselemente (1, 5) festgelegt werden.

## Claims

1. A centring insert device (6) for centring two pipe elements (1, 5) for welding together end to end, the insert being suitable for being inserted inside said pipe elements (1, 5) in register with the ends of said pipe elements that are to be welded together, which ends are preferably centred at their junction plane (7), said centring insert device (6) comprising a main body (4) which extends longitudinally substantially along the axis (XX') of said pipe (1, 5); said main body (4) supporting a plurality of clamps (6a-6b, 6₁-6₄) each comprising a thrust block (8, 8₁, 8₂) suitable for being actuated by a thruster device (9), preferably comprising an actuator, more preferably a pneumatic actuator;
• said thrust blocks (8, 8₁, 8₂) being capable of moving in translation in a radial direction relative to the longitudinal axis (XX') from a retracted position remote from the inside wall of said pipe (1, 5) to a position in which said thrust block (8, 8₁, 8₂) comes into abutment against said pipe wall;
• said thrust blocks (8, 8₁, 8₂) being disposed in a plurality of centring planes (7a-7d) corresponding to section planes, preferably at least four said planes; and
• there being at least three of said thrust blocks (8, 8₁, 8₂) and preferably at least four in each of said planes in a regular angular distribution about said longitudinal axis (XX'); the centring insert device being **characterised in that** said clamps comprise independent clamps (6₁-6₄) disposed in at least one end section plane, preferably in at least one pair of end planes, said thrust blocks (8₁, 8₂) of said independent clamps (6₁-6₄) being suitable for moving in translation in said radial direction independently of one another and in non-uniform manner, the power of their respective thruster devices being limited so that when the first thrust blocks (8₁, 8₂) come into abutment against the inside wall of said pipe, they cease moving while the other thrust blocks (8₁, 8₂) in the same end section plane (7c-7d) which are not yet in contact continue to move until they in turn come into abutment against said inside wall (7c, 7d), said independent clamps (6₁-6₄) of said end plane(s) (7c-7d) thus being suitable for being blocked against the inside wall of said pipe so as to freeze the shape of the pipe in its initial state at said end planes, without deforming the pipe.

2. A centring insert device according to claim 1, **characterised in that** each of said independent clamps (6₁-6₄) in at least one said end plane, and preferably in both said end planes (7c-7d) comprises a thruster device (9₁-9₂) comprising a ramp (9₂) applied against the outside wall of said main body (4), and a said thrust block constituted by a chock (8₁) suitable for moving along the ramp (9₂) and thus moving towards said inside wall of the pipe (1, 5).

3. A centring insert device according to claim 2, **characterised in that** said independent clamp (6₁-6₄) comprises a thruster device (9₁-9₂) comprising an actuator (9₁), preferably a pneumatic actuator, and a ramp (9₂) inclined with a slope that rises from the surface of the main body (4) towards said inside wall of the pipe (1, 5), and said thrust block is constituted by a chock (8₁) of shape complementary to that of the ramp (9₂) in such a manner as to present a slope having the same inclination such that said chock (8₁) actuated by said actuator (9) is suitable for sliding along the ramp (9₂) until it is blocked by being clamped between said ramp (9₂) and said inside wall of the pipe (1, 5).

4. A centring insert device according to claim 1, **characterised in that** said thrust blocks (8₂) of at least one said end plane, and preferably of at least both said end planes (7c-7d) are suitable for moving radially in guide housings of said main body (4), said thruster devices being constituted by actuators, preferably mechanical screw actuators, or hydraulic actuators, disposed radially, said thrust blocks (8₂) being at the ends of the moving rods of said actuators.

5. A centring insert device according to one of claims 1 to 4, **characterised in that** said clamps comprise clamps (6a-6b) having a circular conforming effect in at least one pair of central section planes (7a-7b).

6. A centring insert device according to claim 5, **characterised in that** said clamps (6a-6b) with a circular conforming effect in a given central plane (7a-7b) are constituted by a plurality of thrust blocks (8) suitable for moving uniformly and radially (Y₁Y'₁-Y₂Y'₂), preferably in guide housings of said main body (4), and said thrust blocks (8) in a given central section plane (7a-7b) are actuated uniformly by a common actuator (9), preferably a pneumatic actuator, via a plurality of connecting rods (10), said actuator (9) being placed inside said main body (4), and preferably being disposed longitudinally (XX').

7. A centring insert device according to one of claims 1 to 6, **characterised in that** the thruster devices of said clamps (6a-6b, 6₁-6₄) comprise actuators (9), preferably provided with blocking means for blocking them in an extended position after clamping the corresponding thrust block against said inside wall.

8. A device according to one of claims 1 to 7, **characterised in that** said thrust blocks (8, 8₁, 8₂) are distributed over at least four of said section planes (7), comprising two said central planes (7a, 7b) and at least two said end planes (7c, 7d).

9. A device according to one of claims 1 to 8, **characterised in that** each of said section planes includes at least four, and preferably at least eight of said thrust blocks.

10. A method of assembling and welding together two pipe elements (1, 5) with the help of a centring insert device according to one of claims 1 to 8, the method being **characterised in that** it comprises the steps in which:
1- bringing together the two ends (15₁-15₂) of said pipe elements (1, 5) to be welded together;
2- positioning said centring insert device (6) in a first pipe element (5);
3- advancing said centring insert device (6) inside said first pipe element until said junction plane (7) reaches the middle section plane (7) of said centring insert;
4- where appropriate, actuating said clamps (6a-6b) having a circular conforming effect in said central planes (7a-7b), and then blocking them after they have been clamped against said inside walls of said pipe elements (1, 5); and
5- actuating said independent clamps (6₁-6₄) of said end planes (7c-7d), and then blocking them after they have been clamped against said inside walls of said pipe elements (1, 5).
